# EUROPEAN PATENT SPECIFICATION

(11) **EP 2 448 739 B1**
(45) Date of publication and mention of the grant of the patent: **08.03.2017**
(21) Application number: 09787768.2
(22) Date of filing: 01.07.2009
(51) Int. Cl.: B29C 43/02, B29C 43/18, B29C 43/36, B29C 43/20, B29C 70/46

(54) **PROCESS AND MOULD FOR MOULDING STRUCTURED SHEETS**
VERFAHREN UND GUSSFORM ZUM FORMEN VON STRUKTURIERTEN FOLIEN
PROCÉDÉ ET MOULE DESTINÉS AU MOULAGE DE FEUILLES STRUCTURÉES

(43) Date of publication of application: 09.05.2012
(73) Proprietor: Renolit Gor S.p.A., 10060 Buriasco (TO) (IT)
(72) Inventor: VENERE, Giorgio, I-12025 Dronero (CN) (IT); ODINO, Adriano, I-10060 Angrogna (TO) (IT)
(74) Representative: Karaghiosoff, Giorgio Alessandro
(86) International application number: PCT/IT2009/000291
(87) International publication number: WO 2011/001454

(56) References cited:
- EP-A1- 1 153 725
- WO-A1-2006/122801
- FR-A1- 2 715 600

## Description

The invention relates to a process and a mould for moulding structured sheets.

The term "structured sheet" is understood to mean a part that essentially has two dimensions, and therefore can result from the continuous deformation of a plane part, possessing a thickness substantially smaller (by at least 50 times) than its width and length, but which includes several appendages having a three-dimensional structure. These may for example be fastening ribs or systems, moulded as one part with the sheet. The interior lining of motor vehicles frequently includes such structured sheets, which are made of thermoplastic material.

A known means of producing such structured sheets is the moulding of a molten material in a mould. Examples of any injection moulding of plastics and the casting of aluminium are well known. In the plastics injection moulding process, plastic is heated and mixed in a feed screw and stored in an accumulator. When the latter is full, its content is injected into a temperature-conditioned closed mould where the material is cooled. When the latter has reached a sufficiently low temperature to have a suitable mechanical strength, the mould is opened and the part ejected. However, in particular when the structured sheets are thin, the injection of molten material requires high pressures and therefore heavy and expensive machines.

It is also known to combine compression moulding with injection moulding, such as for example described in EP 1 153 725. In such a process, the two-dimensional part is moulded by compression moulding while the three-dimensional parts are injection moulded. However, an injection moulding machine and a mould capable of withstanding high pressures are still necessary, thereby increasing the cost of the process.

In addition to injectors, conventional moulds have to be provided with runners for the injected material to flow into the several chambers, this involving costs and technical problems.

The document WO2006122801 discloses a process for moulding sheets possessing a three-dimensional structure, in which a blank sheet is placed between the two part of a mould, the surface of which corresponds to the negative of said three-dimensional structure.

At least one portion of the surface of the mould possesses a feature intended to form a local reservoir able to supply or receive material of the three-dimensional structure.

In one embodiment the three-dimensional structure is projecting and the feature of the mould is a protuberance intended to locally reduce the space provided between the two parts of the mould, in order to force, when ther mould is closed, the material to penetrate into the negative and form the three-dimensional structure.

The document FR 2715600 discloses a process for producing a piece in thermoplastic material in a mould by: placing a set quantity of a first thermoplastic at places in the mould corresponding to predetermined parts of the piece; adding a second thermoplastic around the first in sufficient quantity to make the whole piece.

The addition of the second material is such as not to displace the first within the mould. The object of the invention is to provide a simplified process for producing low-cost structured sheets.

The objective of the invention is achieved by the process according to claim 1 and the mould according to claim 14. Preferred embodiments are defined in the subclaims.

The invention relates to a process for moulding plastic sheets possessing, locally, a three-dimensional projecting or recessed structure, in which a plasticized or softened blank sheet is placed between the two parts of a mould, the surface of which comprising a mould cavity for forming the sheet and at least a negative structure corresponding to the one of said three-dimensional structure, and the mould is closed in order to compress the blank sheet and force the plasticized or softened material to flow into the negative structure. According to the invention, in the vicinity of the negative structure on at least one part of the mould a projecting feature is provided said projecting feature being intended to cause the material of the sheet to flow towards the negative structure and/or to provide a local supply capable of supplying material within the negative structure when the mould closes. As an alternative or in combination with said projecting feature it is possible to provide in the vicinity of the negative structure on at least one part of the mould a recessed feature in the mould structure, intended to receive, from the negative structure, the material of the three-dimensional recessed structure, when the mould closes.

The expression "projecting three-dimensional structure" is understood to mean any appendage or accessory, made of the same material as the sheet, which it is desired to be integral with this sheet. Typically, these are stiffening ribs or, for example, fastening systems. They may also be overthicknesses intended to reduce the moulding pressure. A recessed structure is a recess made in the sheet during moulding, allowing any useful accessory to be subsequently introduced into it.

It has been observed that in the vicinity of the negative structure on at least one part of the mould the provision of such projecting or recessed features, constituting small "reservoirs", limits the length of the paths that the plasticized or softened material must follow during moulding, and therefore reduces the moulding pressure. This results in a lower mould-clamping force, and therefore lighter and less expensive machines. Particularly, when the three-dimensional structure of the sheet has to be made as a projecting one, by means of the process and of the mould object of the present invention a better filling of the negative structure provided on the mould and corresponding to the one of said three-dimensional structure is obtained. When the three-dimensional structure of the sheet has to be made as a recessed one, by means of a recessed feature provided in the mould in the vicinity of the negative structure, uncontrolled overthicknesses or surface flaws ("sink marks") are avoided.

In a first preferred version of the process according to the invention, the three-dimensional structure of the plastic sheet is projecting and the feature of the mould in the vicinity of the negative structure on at least one part of the mould, is a protuberance intended to locally reduce the space provided between the two parts of the mould when it is closed, in order to force the material to penetrate into the negative structure and to form the three-dimensional structure of the sheet. The structured sheet will therefore be slightly thinner around the three-dimensional structure to be made. The thickness and the area of the projecting feature depend on the volume of the three-dimensional structure, their product having to be close to and if possible slightly greater than this volume: the volume of the reservoir made on the plasticized or softened blank sheet made during the moulding process by the provision of such features provided in the vicinity of the negative structure on at least one part of the mold, therefore corresponds to the volume of material needed to form the three-dimensional structure. Advantageously, the thickness is greater than 1%, preferably 5% and more preferably 10% of the thickness of the sheet. It is recommended that this reduction remain less than 50%, preferably 30% and more preferably 20% of the thickness of the sheet. For a sheet with a thickness of 2 mm, the thickness of the projecting feature will ideally be between 0.2 and 0.4 mm, giving locally a sheet thickness of between 1.6 and 1.8 mm. The process according to the invention is suitable for moulding sheets having thicknesses that vary widely, for example between 0.5 and 10 mm. The process is however particularly advantageous for moulding thin sheets, having a thickness of less than 5 mm, preferably less than 4 mm. It is especially suitable for sheets having a total thickness of between 2 and 3 mm. The negatives are provided, in a known manner, with air venting systems.

In a second preferred version of the process according to the invention, the three-dimensional structure is projecting and the surface of the mould possesses a movable projecting feature that can slidably project or retract when the mould closes, which projecting feature locally increases the area of the blank sheet, thereby providing material for producing the three-dimensional projecting structure. This projecting feature, which may be slidably retracted within the mould structure, may for example be mounted on a spring. When the mould is open, the feature projecting in the mould cavity raises the blank sheet in the vicinity of the negative to the negative. This results in an excess area of blank sheet, corresponding to the flanks of the raised region. When the mould is closed, the spring is compressed and the projecting feature retracts into the mould. The excess amount of blank sheet serves to fill the negative structure, without requiring flow of material over a long distance, the movable projecting feature having been placed in the vicinity of the negative. The height of the projecting feature is determined so as to supply, approximately and in slight excess, the amount of material needed to form the three-dimensional structure.

According to what described above the provision of a movable or fixed feature projecting into the mould cavity allows the plasticized or softened blank sheet placed between the two parts of a mould during the moulding process to be deformed such to generate a greater local and temporary stretching of the sheet which may be used as a supply of material for filling the negative structure of the mould. As an alternative said feature projecting into the mould cavity results, when the mould is closed, in a greater compression of the sheet near the mould negative which compression causes the material of the plasticized or softened blank sheet placed between the two parts of the mould to flow towards the negative made in the vicinity of the projecting feature, thus causing said negative to be filled by the material and causing the three-dimensional projection of the sheet to be consequently formed.

According to the invention, it is possible to make on the sheet three-dimensional projecting structures having a considerable thickness and/or height by feeding additional plastic material into the negative structure or structures of the mould, which material is stored into said negative or negatives of the projecting three-dimensional structures before arranging the plasticized or softened blank sheet between the two parts of a mould.

According to a first variant the additional material is fed in the fluid condition, preferably by injecting it both manually and mechanically.

A second variant provides said additional material to be fed as a plastic piece having predetermined mass and size. Said piece made of plastic material is in the solid or plastic state or it is already in the softened state or it is converted in such condition by heating it once it is arranged on the mould. A piece of such additional plastic material is manually or automatically arranged at the region of each mould part corresponding to the three-dimensional structure of the finished sheet.

These steps can consist for example in arranging a size piece, such as a kind of stamp or the like, whose size is such to cover mould cavities intended to form the three-dimensional structure of the finished sheet. Preferably said material is composed of polypropylene or like materials.

The additional material injected or arranged into the negative according to the two variants described above adheres to the sheet material supplied into the negative structure by means of the projecting feature provided in the vicinity of said negative such that the additional material added to the material supplied by means of the feature is enough to form the three-dimensional structure of the sheet.

In order to keep the additional material injected into the mould negatives in the fluid or softened condition or to convert the additional material arranged as a piece from the solid condition to the softened condition such that it can adhere to the sheet material during the formation of the three-dimensional structure or structures, it is possible to heat the mould portions involved in the injection or introduction of the material, that is the negatives, at least during the initial step of the moulding process i.e. before closing the mould while the remaining mould portions can remain cool.

The above process that provides the material to be added into the mould negative or negatives is particularly advantageous for making sheets having three-dimensional projecting structures whose height is more than 20 mm.

The process according to the invention may apply to any material having sufficient fluidity to allow moulding and formation of three-dimensional structures by flow under pressure. If required, this fluidity may be obtained by heating the material.

In one advantageous method of implementing the process, the blank sheet is made of a fluid plastic. The process according to the invention is particularly advantageous when the plastic includes fibres, as in this case it is difficult for the material to flow onto the three-dimensional structures in the known processes. These may be glass fibres or fibres of any inorganic material, but also organic fibres such as cotton or wood fibres. The plastic may be a thermoset or a thermoplastic. Preferably it is a thermoplastic, for example a polyolefin such as polypropylene. The precise choice of the material will depend on the fluidity needed to form the three-dimensional structures properly and also, for example, on the final coating of the sheet, in order to bond properly thereto. In this case, the required fluidity may be easily obtained by heating the material to above its softening temperature. In this method of implementation, the mould is cooled down to a temperature below this softening temperature, so as to demould a part having good mechanical properties. It is recommended to employ any means for preventing inhomogeneous and premature cooling of the blank sheet before the mould is closed, for example by means of radiation or circulation of hot air.

The process according to the invention may be used for moulding structured sheets having three-dimensional structures on both its faces. However, in one particularly advantageous version, the sheet possesses a three-dimensional structure only on one of its faces. In this version, when the blank sheet is made of a fluid plastic, it is advantageous for that face intended to remain smooth to be covered with a layer of fibres so as to improve its mechanical integrity, and therefore to make it easier to handle and to reduce the risk of the plastic sticking to the equipment. Moreover, in this version, the process according to the invention makes it possible to obtain a smooth face, free of surface flaws. This is especially advantageous when the three-dimensional structures are deep, as in this case the known processes do not allow a smooth sheet "back", free of sink marks, to be obtained. This advantage of the process according to the invention is even more pronounced when the material is a crystalline polymer, the shrinkage of which as it crystallizes causes, in a known manner, sink marks on the reverse side of large ribs or overthicknesses, that is on the three-dimensional structures. In this version, the excellent surface finish of the face not having a three-dimensional structure allows it to be coated with a thin flexible layer, conforming to the surface finish of the sheet, the coating being for example for cosmetic purposes. The coating may for example be fabrics, sheets of plastics, such as flexible PVC, or leather. This coating may be advantageously produced during moulding of the sheet.

Consequently, in one method of implementing this version, before the mould is closed, a flexible coating is superposed on that face of the blank sheet intended to remain smooth.

In this method of implementation, it is advantageous to place a layer of fibres between the blank sheet and the coating, so as to avoid any deformation of the surface finish of the coating during moulding. It is recommended that the layer of fibres be a fibrous fabric formed from cotton fibres or glass fibres.

In the process according to the invention, a mould having a particular internal surface feature may be used, it being intended to form a local supply capable of supplying material into the negative structure that is said feature serves as a material reservoir around the negatives which will provide for forming the three-dimensional structures of the sheet at the completion of the moulding process.

Consequently as defined in appended claim 14, the invention also relates to a mould for moulding sheets possessing, locally, a three-dimensional projecting or recessed structure, wherein a plasticized or softened blank sheet is arranged between the two parts of said mould, whose surface comprises a cavity for forming the sheet and a negative structure corresponding to the one of said three-dimensional structure and wherein at least one portion of the surface of the mould surrounding said negative possesses a projecting feature, said projecting feature being intended to cause the material of the sheet to flow and/or to form a local supply capable of supplying material into the negative structure when the mould is closed, or a recessed feature in the mould structure, intended to receive the material of the three-dimensional recessed structure, said recessed feature being intended to form a local recess capable of receiving the material from the negative of the three-dimensional recessed structure.

According to a recommended version of the mould according to the invention, the three-dimensional structure is projecting and the feature of the mould is a protuberance into the mould cavity intended to locally reduce the space left between the two parts of the mould when it is closed, in order to force the material to penetrate into the negative and form the three-dimensional structure.

It is also advantageous in the mould according to the invention for the three-dimensional structure to be projecting and the surface of the mould to possess a movable feature intended to be slidably projected or retracted into the mould cavity in the vicinity of the negative structure which movable projecting feature locally increases the area of the blank sheet, thereby providing a supply of material for producing the projecting structure.

Particular aspects of the invention will emerge from the following description of the appended figures.
Figures 1 to 4 are diagrams illustrating various aspects of the process and the mould according to the invention.
Figure 5 shows, at 5a, a known moulding process and at 5b a preferred version of the process and of the mould according to the invention.
Figures 6 and 7 are a variant embodiment of the process and mould of the present invention.

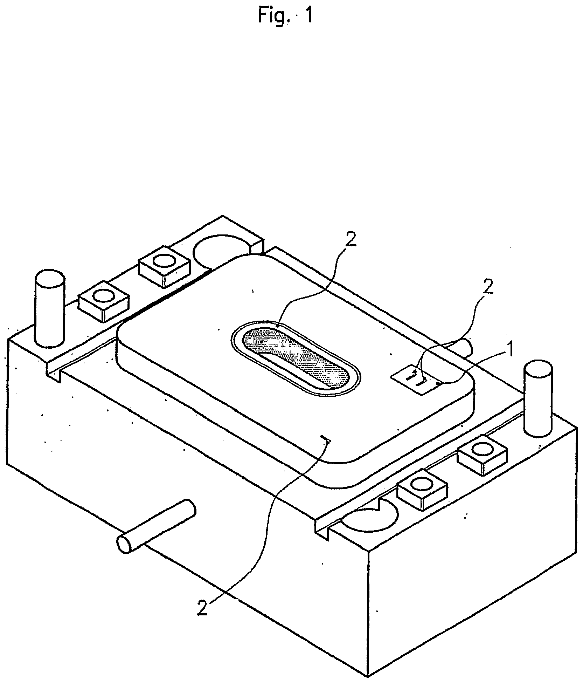

Figure 1 illustrates the negatives 2 of the mould and processes according to the invention, and the protuberance 1 of a preferred version.

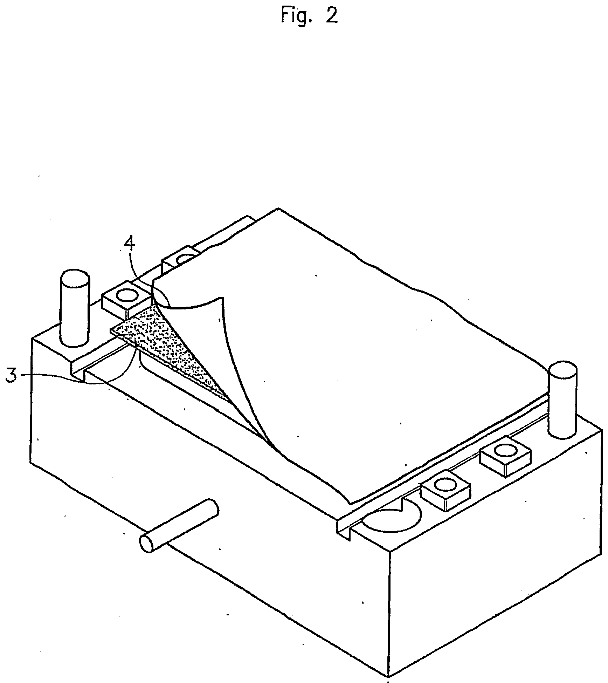

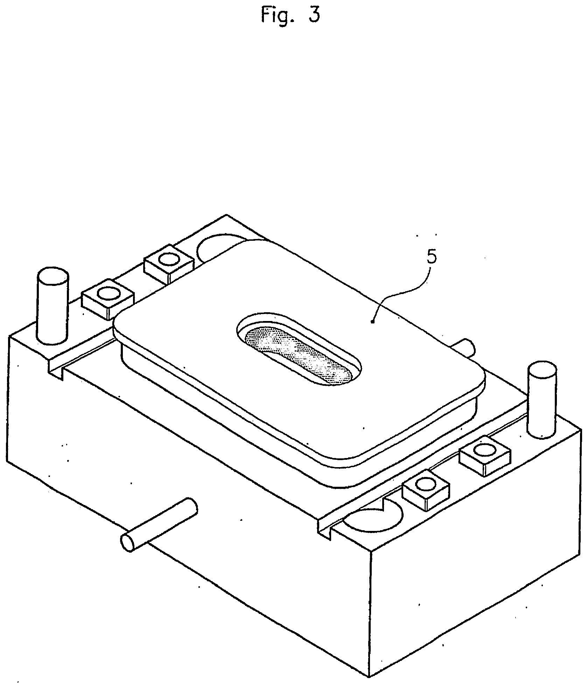

In Figures 2 to 4 may be seen a glass-fibre fabric placed between the blank sheet made of wood-fibre-filled polypropylene and the flexible PVC coating 4, the smooth face 5 containing no three-dimensional structures, and the three-dimensional structures 6 located on the other face.

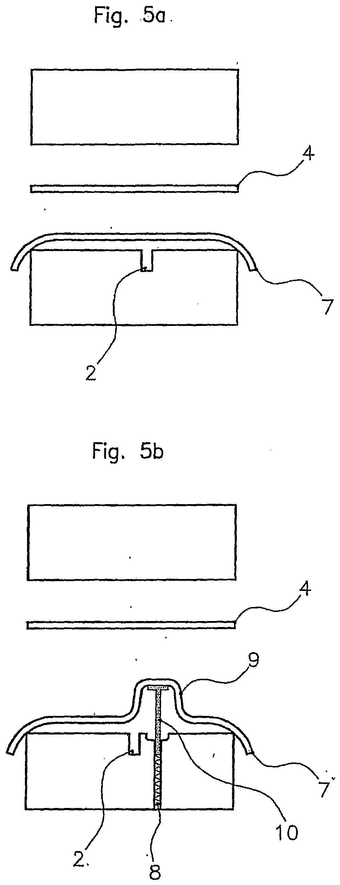

Figure 5 shows the coating 4, the blank sheet 7, the movable feature 10 projecting into the mould cavity that can be retracted into the mould and the negative 2 of the three-dimensional structure. Figure 5b shows that the retractable projecting feature, actuated by the spring 8, causes the appearance of flanks 9 on the blank sheet 7, thereby constituting a supply of material for filling the negative 2.

The following example serves to illustrate the invention.

### Example

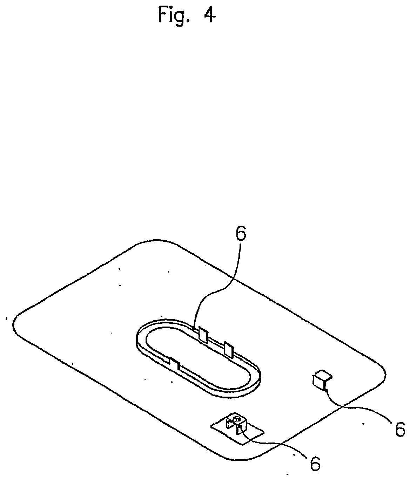

A sheet of polypropylene (BP, HCW, MFI 20 with the dimensions of 2.5 x 250 x 250 mm) filled with 30% of wood fibres, covered with a fabric of polypropylene and kenaf fibres having a thickness of 1.5 mm and a relative density of 1.06, was taken and placed over the mould illustrated in Figure 1. Around the negative 2, the mould has a protuberance 1 with a thickness of 0.5 mm. A coating, consisting of flexible PVC, having a density of 1200 g/m², was placed on top of the glass-fibre fabric. The blank sheet was preheated to a temperature of 210 °C. The mould was kept at a temperature of 50 °C by means of the circulation of a conditioning fluid. The mould was then closed, exerting a force of 60 tonnes for a time of 30 seconds. After the mould was opened, a sheet having three-dimensional structures 6 illustrated in Figure 4 was obtained.

It is possible to obtain three-dimensional projecting structures with a height up to about 20 mm by means of the method and process described above.

According to a variant embodiment of the present invention in order to provide the sheet 7 with three-dimensional projecting structures 6 having a greater thickness or height it is possible to feed and preferably to introduce or inject manually or by means of automatized means 12 a certain amount of additional plastic material 11 in the fluid condition into one or more structures of the negative 2 which correspond to those of said three-dimensional structures 6, with the mould in the open condition and before placing a plasticized or softened blank sheet 7 between the two parts of said mould.

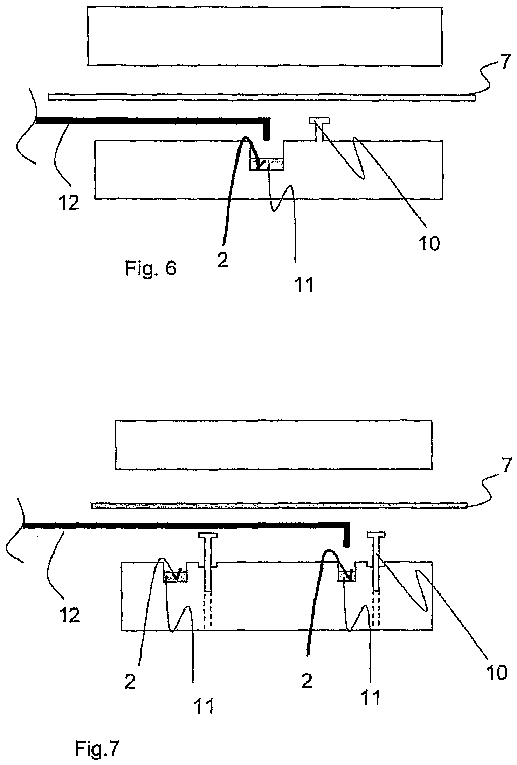

As an alternative to the injection of the additional material in the fluid state, such as shown in figures 6 and 7, said material 11 can be introduced manually or by means of automatic or robotized means into the cavity and so into the negative 11 as a size piece, such as a card or stamp or the like. Obviously the size of said piece of additional material will correspond to the size of the cavity 2.

Due to the fluidity characteristics of said additional material 11 it contacts and adheres to the material of the plasticized or softened blank sheet 7, that is to the material intended to fill the negative 2 such that it contributes to the formation of the projecting three-dimensional structures 6 of the sheet 7 during the moulding process of the sheet 7 that is when the mould is closed.

It is possible to provide said negative or negatives 2 to be locally heated in order to keep said additional material 11 into the mould negative 2 in the fluid state or to convert it in the fluid or softening state till it contacts, when the mould closes, the material of the sheet forced into the negative 2 by the provision of a projecting feature 10.

With the mould in the closed condition, the additional material 11 adhering to the material of the sheet 7 cools and it contributes to the formation of the three-dimensional structure 6 as it is added to the supply of material filling the structure of the negative 2 of the mould which is forced into said negative 2 by the provision of the projecting feature 10.

Therefore the above process allows three-dimensional structures to have a considerable size with respect to the thickness of the sheet while the feature 10 projecting into the mould cavity in the vicinity of the structure of the negative 2 has a small size.

Moreover it has to be noted that the additional material is fed by injecting or introducing it with the mould in the open condition and therefore moulds do not require complex runners suitably adjusted for injecting the material as on the contrary it is necessary for conventional methods.

According to a preferred embodiment said additional material 11 both hot injected into the structures of the mould negative 2 and arranged into the structures of the mould negative 2 is a special material such as for example pure polypropylene, i.e. a material having a high fluidity if heated.

The amount of additional material 11 to be fed into the negative structure depends on the size of the desired three-dimensional structure 6 of the sheet 7: the supply of material filling the structure of the mould negative 2 forced into the negative 2 by the provision of the projecting feature 10 fills the portion of the negative cavity free from additional material 11. In order to measure the amount of additional material 11 to be fed into the negative it is necessary to consider the portion of additional material 11, defined as bonding material, that will be used for the chemical-physical adhesion to the material of the sheet 7.

Therefore a first embodiment of the process provides ribs and/or appendages to be made on one face of a sheet by using a known injector 12 placed beside the mould which injector 12 injects into the negative 2 a predetermined amount of high-fluidity material depending on the final volume of the desired ridge, web and/or appendage. Then the injector 12 is moved away from the mould, the plasticized or softened blank sheet 7 is placed between the two parts of said mould and the mould is closed such that the fixed or movable projecting feature 10 provided in the vicinity of the structure of the negative 2 on at least one part of the mould and intended to project into the mould cavity, can cause the material of the blank sheet to flow towards the structure of the negative 2 or can make a local supply capable of supplying material into the structure of the negative 2, which material, in addition to the additional filling material, contributes to the formation of the three-dimensional structures 6 of the sheet 7.

Therefore the above process allows costs for moulding the sheet 7 to be reduced since it provides to use simple moulds, free from runners and injection systems inside the mould for injecting material into the negatives 2. The injection of the additional material 11 contributing to the formation of the projecting three-dimensional structures 6 of the sheet 7 occurs with the mould in the open condition, by means of simple known injectors 12, before placing the sheet 7 into the mould cavity for forming said sheet 7.

Particularly the additional filling plastic material 11 is fed by means of manually-operated or automatized injectors, which injectors 12 are introduced between the two parts of the mould, with the mould in the open condition, and are moved at one or more structures of the negative 2, in order to inject the additional filling plastic material 11. Then, once the negative 2 is filled with the predetermined amount of fluid material said injectors are taken out from the mould to allow said mould to be closed and the sheet 7 to be consequently moulded.

Instead of the injection the variant embodiment provides the simple introduction of a size piece made of additional plastic material into a cavity of the mould intended to form the three-dimensional structure on the finished sheet. Such size piece has such a mass and size to allow the three-dimensional structures to be made. The use of injectors and the acquisition and maintenance costs related thereto are advantageously omitted with such version.

Generally and with reference to both the main versions, the above method allows costs to be reduced since the special, pure and high-fluidity material can be used only locally as the material for filling the mould negatives 2.

## Claims

1. Process for moulding sheets made of plastic material possessing a three-dimensional projecting or recessed structure (6), the process comprising:
a) arranging a plasticized or softened blank sheet (7) between the two parts of a mould, the surface of which comprising a mould cavity for forming the sheet and at least a structure of the negative (2) corresponding to the one of said at least one three-dimensional structure (6),
b) closing the mould in order to compress the blank sheet (7) and force the plasticized or softened material to flow into the structure of the negative (2),
c) near the structure of the negative (2) on at least one part of the mould a feature (10) intended to project into the mould cavity or a recessed feature in the mould structure is provided,
d) said projecting feature (10) being intended to cause the material of the sheet to flow towards the structure of the negative (2) and to provide a local supply capable of supplying material within the structure of the negative (2) when the mould closes and said feature (10) projects into the mould cavity, while said recessed feature being intended to receive the material from the structure of the negative (2) for forming the three-dimensional recessed structures when the mould closes,
**characterized in that** it provides to feed additional filling plastic material (11) into the structure of the negative (2) for contributing to the formation of three-dimensional projecting structures (6), with the mould in the open condition and before arranging a plasticized or softened blank sheet (7) between the two parts of said mould.

2. Process according to the preceding claim, **characterized in that** the three-dimensional structure is projecting and the feature of the mould is a protuberance (10) into the mould cavity intended to locally reduce the space provided between the two parts of the mould when it is closed, in order to force the material of the plasticized or softened blank sheet (7) to penetrate into the structure of the negative (2) to form the three-dimensional structure (6) of the sheet (7) .

3. Process according to any one of the preceding claims, **characterized in that** the three-dimensional structure is projecting and at least one surface of the mould possesses a movable feature (10) intended to be slidably projected or retracted into the mould cavity when the mould closes, said movable feature (10) locally increasing the area of the blank sheet (7) by the appearance of flanks (9), thereby providing the material to be supplied into the structure of the negative (2) for producing the three-dimensional projecting structure (6).

4. Process according to any one of the preceding claims, **characterized in that** the blank sheet is made of a fluid plastic.

5. Process according to the preceding claim, **characterized in that** the fluid plastic is a thermoplastic that has been preheated to above its softening point and in which the mould is conditioned at a temperature below the softening point.

6. Process according to claim 1 **characterized in that** the additional filling plastic material (11) is fed in the fluid state by means of manually-operated or robotized injectors, which injectors (12) are placed between the two parts of the mould, with the mould in the open condition, and are moved at one or more structures of the negative (2), for allowing the additional filling plastic material (11) to be injected, said injectors being subsequently taken out from the mould to allow said mould to be closed and the sheet (7) to be consequently moulded.

7. Process according to claim 1, **characterized in that** the additional filling plastic material (11) is fed into the structure of the negative (2) in the plastic and/or solid state by arranging manually or by means of automatic mechanical means at least a piece having predetermined mass and size into a predetermined region of the mould in the portion where the three-dimensional part of the sheet is made.

8. Process according to any one of the preceding claims, **characterized in that** it provides the structure of the negative (2) to be locally heated in order to keep and/or convert said additional material (11) into the mould negative (2) in the fluid or softening state till it contacts, when the mould closes, the material of the sheet forced and/or supplied into the negative (2) by the provision of a projecting feature (10).

9. Process according to claim 8, **characterized in that** said additional plastic material (11) is composed of a high-fluidity plastic, for example pure polypropylene.

10. Process according to any one of the preceding claims, **characterized in that** the sheet (7) possesses a three-dimensional structure only on one of its faces.

11. Process according to the preceding claim, **characterized in that**, before the mould is closed, a flexible coating (4) is superposed on that face of the blank sheet (7) intended to remain smooth.

12. Process according to the preceding claim, **characterized in that** a layer of fibres is placed between the blank sheet (7) and the coating (4).

13. Process according to the preceding claim, **characterized in that** the layer of fibres is a fibrous fabric.

14. Mould for moulding sheets made of plastic material having a three-dimensional projecting or recessed structure (6), wherein a plasticized or softened blank sheet (7) is arranged between the two parts of a mould, whose surface comprises a mould cavity for forming the sheet and a structure of the negative (2) corresponding to the one of said three-dimensional structure (6), the structure of the negative (2) on at least one part of the mould there being provided a feature (10) intended to project into the mould cavity or a recessed feature in the mould cavity, said projecting feature (10) being intended to cause the material of the sheet to flow towards the structure of the negative (2) and to form a local supply capable of supplying material into the structure of the negative (2) when the mould is closed and said feature (10) projects into the mould cavity, while said recessed feature being intended to receive the material from the structure of the negative (2) when the mould closes for forming the three-dimensional recessed structures, **characterized in that** for moulding sheets made of plastic material possessing a three-dimensional projecting structure (6), are provided automatic mechanical means for feeding additional filling plastic material (11) or manually-operated or robotized injectors, which means or injectors (12) are placed between the two parts of the mould, with the mould in the open condition, and are moved at one or more structures of the negative (2), for allowing the additional filling plastic material (11) to be feded, said means or injectors being subsequently taken out from the mould to allow said mould to be closed and the sheet (7) to be consequently moulded.

15. Mould according to the claim 14, **characterized in that** the mould feature is a protuberance (10) into the mould cavity intended to locally reduce the space between the two parts of the mould when it is closed, in order to force the material of the plasticized or softened blank sheet (7) to penetrate into the structure of the negative (2) to form the three-dimensional structure (6) of the sheet (7).

16. Mould according to claim 14, **characterized in that** at least one surface of the mould has a movable feature (10) intended to be slidably projected or retracted into the mould cavity when the mould closes, said movable feature (10) locally increasing the area of the blank sheet (7) by the appearance of flanks (9), thereby providing material to be supplied into the structure of the negative (2) for producing the three-dimensional projecting structure (6).

## Patentansprüche

1. Verfahren zum Formen von Kunststofffolien, die eine vorspringende oder vertiefte dreidimensionale Struktur (6) aufweisen, das Verfahren umfassend:
a) Platzieren einer aufgeweichten oder plastifizierten Rohfolie (7) zwischen zwei Teilen eines Formwerkzeuges, dessen Oberfläche aus einer Formkavität zum Formen der Folie und mindestens aus einer Struktur (2) des Negativs besteht, die mit jener der mindestens einen dreidimensionalen Struktur (6) korrespondiert,
b) Schließen des Formwerkzeuges, um die Rohfolie (7) zu komprimieren und das aufgeweichte oder plastifizierte Material zu zwingen, in die Struktur (2) des Negativs einzufließen,
c) nahe der negativen Struktur (2) mindestens an einem Abschnitt des Formwerkzeuges ein Merkmal (10) vorgesehen ist, das in die Formkavität vorsteht, oder ein vertieftes Merkmal in die Formwerkzeug-Struktur vorgesehen ist,
d) das genannte vorspringende Merkmal (10) vorgesehen ist, um ein Fließen des Folienmaterials in der Struktur des Negativs (2) und eine örtliche Zuführung zum Zuführen des Materials in die Struktur des Negativs (2) bei geschlossenem Formwerkzeug zu bewirken, wenn das Formwerkzeug geschlossen ist und das Merkmal (10) in der Formkavität vorsteht, während das vertiefte Merkmal dazu vorgesehen ist, das Material der Struktur des Negativs (2) aufzunehmen, um die dreidimensionalen vertieften Strukturen zu formen, wenn das Formwerkzeug geschlossen ist,
**dadurch gekennzeichnet, dass** es vorsieht, zusätzliches Kunststoff-Füllmaterial (11) in die Struktur des Negativs (2) zuzuführen, um zur Formung der dreidimensionalen vorspringenden Strukturen (6) beizutragen, bei offenem Formwerkzeug und vor Platzieren einer aufgeweichten oder plastifizierten Folie (7) zwischen zwei Teilen des Formwerkzeuges.

2. Verfahren nach dem vorhergehenden Anspruch, **dadurch gekennzeichnet, dass** die dreidimensionale Struktur vorspringend ausgebildet ist und das genannte Merkmal des Formwerkzeuges ein Vorsprung (10) in der Formkavität ist, durch den jener Raum örtlich begrenzbar ist, welcher bei geschlossenem Formwerkzeug zwischen den zwei Teilen des Formwerkzeuges vorgesehen ist, um das Material der aufgeweichten oder plastifizierten Folie (7) zu zwingen, in die Struktur des Negativs (2) einzudringen, um die dreidimensionale Struktur (6) der Folie (7) zu formen.

3. Verfahren nach einem der vorhergehenden Ansprüche, **dadurch gekennzeichnet, dass** die dreidimensionale Struktur vorspringend ausgebildet ist und wenigstens eine Oberfläche des Formwerkzeuges ein bewegliches Merkmal (10) aufweist, das gleitend in die Formkavität einführbar oder aus dieser zurückziehbar ist, wenn das Formwerkzeug geschlossen ist, wobei das genannte bewegliche Merkmal (10) die Fläche der Rohfolie (7) durch die Entstehung von Flanken (9) örtlich vergrößert und dabei veranlasst, dass das Material zur Formung der vorspringenden dreidimensionalen Struktur (6) in die Struktur des Negativs (2) zugeführt wird.

4. Verfahren nach einem der vorhergehenden Ansprüche, **dadurch gekennzeichnet, dass** die Rohfolie aus flüssigem Kunststoff ausgebildet ist.

5. Verfahren nach dem vorhergehenden Anspruch, **dadurch gekennzeichnet, dass** das flüssige Kunststoff ein thermoplastisches Material ist, das über seinen Erweichungspunkt vorgeheizt wird und wobei das Formwerkzeug unter seinen Erweichungspunkt temperiert wird.

6. Verfahren nach Anspruch 1, **dadurch gekennzeichnet, dass** das zusätzliche Füllungs-Kunstoffmaterial (11) im flüssigem Zustand durch handbetriebene oder robotisierte Injektoren zugeführt wird, welche Injektoren (12) zwischen den beiden Teilen des Formwerkzeuges bei offenem Formwerkzeug angeordnet sind, und an einer oder mehreren Strukturen des Negativs (2) bewegt werden, um das Zuführen des zusätzlichen Füllungs-Kunstoffmaterials (11) zu gestatten, wobei die Injektoren anschließend von dem Formwerkzeug entfernt werden, um das Schließen des Formwerkzeugs zu gestatten und anschließend die Folie (7) zu formen.

7. Verfahren nach Anspruch 1, **dadurch gekennzeichnet, dass** das zusätzliche Füllungs-Kunstoffmaterial (11) im plastischen und/oder festen Zustand in die Struktur des Negativs (2) eingeführt wird, indem mindestens ein Teil mit vorbestimmter Masse und Größe durch eine manuelle Betätigung oder mittels automatischer mechanischer Mittel in einem vorbestimmten Bereich des Formwerkzeuges in jenem Abschnitt, wo das dreidimensionale Teil der Folie gebildet wird, angeordnet wird.

8. Verfahren nach einem der vorhergehenden Ansprüche, **dadurch gekennzeichnet, dass** es vorgesehen ist, die Struktur des Negativs (2) örtlich zu erwärmen, um das zusätzliche Material (11) innerhalb des Formwerkzeug-Negativs (2) im flüssigen oder aufgeweichten Zustand zu umwandeln und/oder aufrecht zu halten, bis es bei geschlossenem Formwerkzeug mit jenem Material der Folie in Berührung kommt, welches in das Negativ (2) durch Vorsehen eines vorspringenden Merkmals (10) eingetrieben und/oder zugeführt ist.

9. Verfahren nach Anspruch 8, **dadurch gekennzeichnet, dass** das zusätzliche Kunststoffmaterial (11) aus einem Kunststoff mit hoher Fliessfähigkeit, z. B. aus reinem Polypropylen, besteht.

10. Verfahren nach einem der vorhergehenden Ansprüche, **dadurch gekennzeichnet, dass** die Folie (7) nur auf einer seiner Seiten eine dreidimensionale Struktur aufweist.

11. Verfahren nach dem vorhergehenden Anspruch, **dadurch gekennzeichnet, dass** bevor das Formwerkzeug geschlossen ist, ein flexibler Überzug (4) auf jener Seite der Rohfolie (7) aufgebracht wird, welche glatt bleiben soll.

12. Verfahren nach dem vorhergehenden Anspruch, **dadurch gekennzeichnet, dass** eine Schicht von Fasern zwischen der Rohfolie (7) und dem Überzug (4) angeordnet ist.

13. Verfahren nach dem vorhergehenden Anspruch, **dadurch gekennzeichnet, dass** die Schicht von Fasern ein fasriges Gewebe ist.

14. Formwerkzeug zur Formung von Folien aus Kunststoffmaterial, bestehend aus einer vorspringenden oder vertieften dreidimensionalen Struktur (6), wobei eine aufgeweichte und plastifizierte Rohfolie (7) zwischen zwei Teilen eines Formwerkzeuges angeordnet ist, dessen Oberfläche eine Formkavität zum Formen der Folie und eine Struktur des Negativs (2), die mit der dreidimensionalen Struktur (6) korrespondiert, aufweist, wobei die Struktur des Negativs (2) auf wenigstens ein Teil des Formwerkzeugs ein Merkmal (10) aufweist, das in die Formkavität vorsteht, oder ein vertieftes Merkmal in die Formwerkzeug-Struktur vorgesehen ist, und das genannte Merkmal (10) vorgesehen ist, um ein Fließen des Folienmaterials zu der Struktur des Negativs (2) und eine örtliche Zuführung zum Zuführen des Materials in die Struktur des Negativs (2) zu bewirken, wenn das Formwerkzeug geschlossen ist und das Merkmal (10) in der Formkavität vorsteht, während das vertiefte Merkmal dazu vorgesehen ist, das Material von der Struktur des Negativs (2) aufzunehmen, um die dreidimensionalen vertieften Strukturen zu formen, wenn das Formwerkzeug geschlossen ist, **dadurch gekennzeichnet, dass** für zu formende Folien aus Kunststoffmaterial mit einer vorspringenden dreidimensionalen Struktur (6) automatische Mittel zur Zuführung von zusätzlichen Füllungs-Kunstoffmaterial (11) oder handbetriebene oder robotisierte Injektoren vorgesehen sind, welche Mittel oder Injektoren (12) zwischen beiden Teilen des Formwerkzeugs bei geöffnetem Formwerkzeug angeordnet sind, und an einer oder mehreren Strukturen des Negativs (2) bewegt werden, um das Zuführen des zusätzlichen Füllungs-Kunstoffmaterial (11) zuzulassen, wobei die Mittel oder Injektoren anschließend von dem Formwerkzeug entfernt werden, um das Schließen des Formwerkzeugs zuzulassen und anschließend die Folie (7) zu formen.

15. Formwerkzeug nach Anspruch 14, **dadurch gekennzeichnet, dass** das Formwerkzeugsmerkmal ein Vorsprung (10) in der Formkavität ist, durch den jener Raum örtlich begrenzbar ist, welcher bei geschlossenem Formwerkzeug zwischen den zwei Teilen des Formwerkzeugs vorgesehen ist, um das Material der aufgeweichten oder plastifizierten Folie (7) zu zwingen, in die Struktur des Negativs (2) einzudringen, um die dreidimensionale Struktur (6) der Folie (7) zu formen.

16. Formwerkzeug nach Anspruch 14, **dadurch gekennzeichnet, dass** wenigstens eine Oberfläche des Formwerkzeugs ein bewegliches Merkmal (10) aufweist, das gleitend in die Formkavität einführbar oder aus dieser zurückziehbar ist, wenn das Formwerkzeug geschlossen ist, wobei das genannte bewegliche Merkmal (10) die Fläche der Rohfolie (7) durch die Entstehung von Flanken (9) örtlich vergrößert und dabei veranlasst, dass das Material zur Herstellung der vorspringenden dreidimensionalen Struktur (6) in die Struktur des Negativs (2) zugeführt wird.

## Revendications

1. Procédé de moulage de feuilles en matière plastique possédant une structure tridimensionnelle en saillie ou en retrait (6), le procédé comprenant
a) l'agencement d'une feuille non imprimée plastifiée ou ramollie (7) entre les deux parties d'un moule, dont la surface comprend une cavité de moule pour la formation de la feuille et au moins une structure de négatif (2) correspondant à celle de l'une de ladite au moins [SI1] une structure tridimensionnelle (6),
b) la fermeture du moule afin de comprimer la feuille non imprimée (7) et de forcer la matière plastifiée ou ramollie à couler dans la structure du négatif (2),
c) l'utilisation, proche de la structure du négatif (2) sur au moins une partie du moule, d'un attribut (10) conçu pour faire saillie dans la cavité du moule ou d'un attribut en retrait dans la structure du moule,
d) ledit attribut en saillie (10) servant à provoquer l'écoulement de la matière de la feuille vers la structure du négatif (2) et/ou à offrir un approvisionnement local susceptible d'approvisionner la matière dans la structure du négatif (2) lors de la fermeture du moule et de la saillie dudit attribut (10) dans la cavité du moule, ledit attribut en retrait servant quant à lui à recevoir la matière provenant de la structure du négatif (2) pour former les structures tridimensionnelles en retrait lors de la fermeture du moule,
**caractérisé en ce qu'**il comporte l'alimentation d'une matière plastique de remplissage supplémentaire (11) dans la structure du négatif (2) pour contribuer à la formation de structures tridimensionnelles en saillies (6) avec le moule en état d'ouverture et avant d'agencer une feuille non imprimée plastifiée ou ramollie (7) entre les deux parties dudit moule.

2. Procédé selon la revendication précédente, **caractérisé en ce que** la structure tridimensionnelle est en saillie et l'attribut du moule est une protubérance (10) dans la cavité de moule, conçu pour réduire localement l'espace prévu entre les deux parties du moule lors de sa fermeture, afin de forcer la matière de la feuille non imprimée plastifiée ou ramollie (7) à pénétrer dans la structure du négatif (2) pour former la rupture tridimensionnelle (6) la feuille (7).

3. Procédé selon n'importe laquelle des revendications précédentes, **caractérisé en ce que** la structure tridimensionnelle est en saillie et au moins une surface du moule possède un attribut mobile (10) conçu pour venir en saillie ou en retrait de façon coulissante dans la cavité du moule lors de la fermeture du moule, ledit attribut mobile (10) augmentant localement l'aire de la feuille non imprimée (7) par la présence de flancs (9), de manière à fournir la matière à alimenter dans la structure du négatif (2) pour produire la structure tridimensionnelle en saillie (6).

4. Procédé selon n'importe laquelle des revendications précédentes, **caractérisé en ce que** la feuille non imprimée est constituée d'une matière plastique fluide.

5. Procédé selon les revendications précédentes, **caractérisé en ce que** la matière plastique fluide est une matière thermoplastique préalablement préchauffée au-dessus de son point de ramollissement, et dans lequel le moule est conditionné à une température inférieure au point de ramollissement.

6. Procédé selon la revendication 1, **caractérisé en ce que** la matière plastique de remplissage supplémentaire (11) est alimentée à l'état fluide au moyen d'injecteurs manuels ou robotisés, lesdits injecteurs (12) étant placés entre les deux parties du moule, avec le moule en état d'ouverture, et étant déplacés au niveau d'une ou plusieurs structures du négatif (2), pour permettre l'injection de la matière plastique de remplissage supplémentaire (11), lesdits injecteurs étant ensuite retirés du moule pour permettre la fermeture du dit moule et par conséquent le moulage de la feuille (7).

7. Procédé selon la revendication 1, **caractérisé en ce que** la matière plastique de remplissage supplémentaire (11) est alimentée dans la structure du négatif (2) à l'état plastique et/ou solide, par la mise en place manuelle ou par des moyens mécaniques automatiques d'au moins une pièce ayant une masse et une dimension prédéterminées dans une région prédéterminée du moule, dans la zone où la partie tridimensionnelle de la feuille est fabriquée.

8. Procédé selon n'importe laquelle des revendications précédentes, **caractérisé en ce qu'**il comporte le chauffage localisé de la structure du négatif (2) pour maintenir et/ou convertir ladite matière supplémentaire (11) dans le négatif du moule (2) à l'état fluide ou ramolli jusqu'à ce qu'elle ne contacte, lors de la fermeture du moule, la matière de la feuille forcée et/ou alimentée dans le négatif (2) par la mise en oeuvre d'un attribut en saillie (10).

9. Procédé selon la revendication 8, **caractérisé en ce que** ladite matière plastique supplémentaire (11) est composée d'une matière plastique haute fluidité, par exemple du polypropylène pur.

10. Procédé selon n'importe laquelle des revendications précédentes, **caractérisé en ce que** la feuille (7) présente une structure tridimensionnelle seulement sur l'une de ses faces.

11. Procédé selon n'importe laquelle des revendications précédentes, **caractérisé en ce que**, avant la fermeture du moule, un revêtement souple (4) est superposé sur la face de la feuille non imprimée (7) destiné à rester lisse.

12. Procédé selon n'importe laquelle des revendications précédentes, **caractérisé en ce qu'**une couche de fibres est placée entre la feuille non d'imprimée (7) et le revêtement (4).

13. Procédé selon la revendication précédente, **caractérisée en ce que** la couche de fibres est un tissu fibreux.

14. Moule pour le moulage de feuilles en matière plastique possédant une structure tridimensionnelle en saillie ou en retrait (6), dans lequel une feuille non imprimée plastifiée ou ramollie (7) est agencée entre les deux parties d'un moule, dont la surface comprend une cavité de moule pour la formation de la feuille et une structure de négatif (2) correspondant à l'une de ladite structure tridimensionnelle (6),la structure du négatif (2) sur au moins une partie du moule étend pourvue d'un attribut (10) destiné à faire sailli dans la cavité de moule ou un attribut en retrait dans la cavité de moule, ledit attribut en saillie (10) servant à provoquer l'écoulement de la matière de la feuille vers la structure du négatif (2) et à offrir un approvisionnement local susceptible d'approvisionner la matière dans la structure du négatif (2) lors de la fermeture du moule et de la saillie dudit attribut (10) dans la cavité du moule, ledit attribut en retrait servant quant à lui à recevoir la matière provenant de la structure du négatif (2), lors de la fermeture du moule, pour former les structures tridimensionnelles en retrait, **caractérisé en ce que**, pour le moulage de lieu en matière plastique possédant une structure tridimensionnelle en saillie (6) il est prévu des moyens mécaniques automatiques pour alimenter
une matière plastique de remplissage supplémentaire
ou des injecteurs manuels ou robotisés lesdits moyens ou injecteurs (12) étant placé entre les deux parties du moule (avec le moule en état d'ouverture, et étant déplacés au niveau d'une ou plusieurs structures du négatif (2), pour permettre l'injection de la matière plastique de remplissage supplémentaire (11), lesdits moyens ou injecteurs étant ensuite retirés du moule pour permettre la fermeture du dit moule et par conséquent le moulage de la feuille (7).

15. Moule selon la revendication 14, **caractérisé en ce que** l'attribut du moule est une protubérance (10) dans la cavité de moule, conçu pour réduire localement l'espace entre les deux parties du moule lors de sa fermeture, afin de forcer la matière de la feuille non imprimée plastifiée ou ramollie (7) a pénétrer dans la structure du négatif (2) pour former la rupture tridimensionnelle (6) la feuille (7).

16. Moule selon la revendication 14, **caractérisé en ce qu'**au moins une surface du moule possède un attribut mobile (10) conçu pour venir en saillie ou en retrait de façon coulissante dans la cavité du moule lors de la fermeture du moule, ledit attribut mobile (10) augmentant localement l'aire de la feuille non imprimée (7) par la présence de flancs (9), de manière à fournir la matière à alimenter dans la structure du négatif (2) pour produire la structure tridimensionnelle en saillie (6).
